# EUROPÄISCHE PATENTANMELDUNG

(11) **EP 2 677 208 A1**
(43) Veröffentlichungstag der Anmeldung: **25.12.2013**
(21) Anmeldenummer: 13002776.6
(22) Anmeldetag: 29.05.2013
(51) Int. Cl.: F16H 57/08, F03D 11/02

(54) **Planetensteg zur Verbindung zweier Planetenstegwangen und Gusskern und Verfahren zum Herstellen**

(30) Priorität: 18.06.2012 DE 102012012098
(71) Anmelder: ROBERT BOSCH GMBH, 70442 Stuttgart (DE)
(72) Erfinder: Lehmann, Marco, 42275 Wuppertal (DE); Kleine-Brockhoff, Ralf, 46284 Dorsten (DE); Schweihoff, Claudia, 44795 Bochum (DE); Daners, Dominikus, 45701 Herten (DE)
(74) Vertreter: Wiesmann, Stephan

(57) **Zusammenfassung**

Planetensteg 15 zur Verbindung zweier Planetenstegwangen 11a, 11 b zur Bildung eines Planetenradraums 20 eines Planetenträgers 10 eines Planetengetriebes 4, wobei der Planetensteg 15 in axialer Richtung des Planetenträgers 10 einen von Umfangswandungen 16 begrenzten Hohlraum 17aufweist. Erfindungsgemäß wird ein Planetenträger 10 mit zumindest einem Planetensteg 15 angegeben, der gegenüber dem Stand der Technik insbesondere herstellungsmäßig verbessert ist. Erreicht wird dies dadurch, dass der Planetensteg 15 zumindest eine in einer Umfangswandung 16 des Planetenstegs 15 angeordnete und den Hohlraum 17 mit dem Planetenradraum 20 verbindende Durchbrechung 21 aufweist. Weiterhin betrifft die Erfindung einen entsprechenden Planetenträger, einen Gusskern und ein Verfahren zum Herstellen eines Planetenträgers.

## Beschreibung

Die Erfindung betrifft einen Planetensteg zur Verbindung zweier Planetenstegwangen zur Bildung eines Planetenradraums eines Planetenträgers eines Planetengetriebes, wobei der Planetensteg in axialer Richtung des Planetenträgers einen von Umfangswandungen begrenzten Hohlraum aufweist. Weiterhin betrifft die Erfindung einen Gusskern zum Herstellen eines solchen Planetenträgers und ein Verfahren zum Herstellen eines Planetenträgers in einer Gießform.

Ein gattungsgemäßer Planetensteg ist aus der CN 200986018Y bekannt. Der in diesem Gebrauchsmuster beschriebene Planetenträger weist drei in Umfangsrichtung verteilt angeordnete Planetenträger auf, die einen von Umfangswandungen begrenzten Hohlraum aufweisen. Dieser Hohlraum trägt gegenüber bekannten massiv ausgebildeten Planetenstegen zu einer Gewichtsreduzierung bei.

Der Erfindung liegt die Aufgabe zugrunde, einen Planetensteg für einen Planetenträger, weiterhin einen entsprechend ausgebildeten Planetenträger sowie einen Gusskern und ein Verfahren zum Herstellen eines solchen Planetenträgers anzugeben, der/das gegenüber dem Stand der Technik insbesondere herstellungstechnisch verbessert ist.

Diese Aufgabe wird dadurch gelöst, dass der Planetensteg zumindest eine in einer Umfangswandung des Planetenstegs angeordnete und den Hohlraum mit dem Planetenradraum verbindende Durchbrechung aufweist. Der entsprechende Gusskern bzw. das entsprechende Verfahren zum Herstellen eines Planetenträgers in einer Gießform sieht vor, dass ein einziger Gusskern für den Planetenträger zum Einsatz in eine Gießform vorgesehen ist, und dass ein den Planetenradraum bildender Teilkern und ein den Hohlraum bildender Teilkern des Gusskerns über zumindest eine Durchbrechung in einer Umfangswand des Steges miteinander verbunden sind. Dadurch wird der Herstellungsvorgang insofern verbessert, dass nur ein einziger ggf. aus Teilkernen gebildeter Gusskern vorgesehen ist, der in eine entsprechende Gießform eingesetzt wird. Ein einziger Gusskern hat den Vorteil, dass die Gefahr des Verschiebens oder des Wegbrechens einzelner in die Gießform eingesetzter Gusskerne ausgeschlossen ist. Auch werden Herstellungsfehler, die beispielsweise durch ein falsches Einsetzen einzelner Gusskerne in die Gießform ausgelöst werden können, sicher vermieden, Schließlich wird durch die durch den an dem Planetensteg gebildeten Hohlraum eine Gewichtsreduzierung und somit eine Materialeinsparung erreicht. Die erfindungsgemäße Durchbrechung in der Umfangswandung des Planetenstegs ist so ausgebildet und angeordnet, dass keine Schwächung der durch den Planetensteg dargestellten Verbindung der Planetenstegwangen eintritt.

In Weiterbildung der Erfindung sind in zwei zumindest angenähert gegenüberliegenden Umfangswandungen jeweils zumindest eine Durchbrechung angeordnet. Diese Ausgestaltung stellt sicher, dass der Teilkern für den Hohlraum und der Teilkern für den Planetenradraum auf zwei gegenüberliegenden Seiten sicher miteinander verbunden sind.

In weiterer Ausgestaltung der Erfindung ist die Durchbrechung als unterbrochene Wandung (der Umfangswandung) ausgebildet. Die Durchbrechung kann somit als eine Öffnung in einer vorhandenen Umfangswandung ausgebildet sein oder aber die Umfangswandung kann zumindest in einem Teilbereich vollkommen entfernt und somit als unterbrochene Wandung ausgebildet sein. Hierbei bietet es sich an, die Wandung insbesondere in gering belasteten Bereichen zu unterbrechen. Diese insbesondere zu einer Lagerbohrung für ein Sonnenrad ausgerichtete Durchbrechung, die somit einen nach innen offenen Planetensteg schafft, ist unabhängig von der hier beschriebenen Erfindung eine eigenständige Erfindungsidee.

In Weiterbildung der Erfindung sind die Durchbrechungen unsymmetrisch in den Umfangswandungen angeordnet. Durch diese unsymmetrische Anordnung können unterschiedliche Belastungen des Planetenträgers berücksichtigt werden oder aber auch gewünschte Schmiereffekte des sich In einem Ölbad drehenden Planetenträgers zur Schmierung der Zahnräder des Planetengetriebes erzielt werden.

In weiterer Ausgestaltung der Erfindung ist die Durchbrechung durch einen Gusskern gebildet, Dabei weist der die Durchbrechung bildende Gusskern eine gießtechnisch gut darstellbare Ausgestaltung, beispielsweise in einer runden Form, in einer herzförmigen Form, in Form eines gerundeten Dreiecks, in einer spatenförmigon Ausgestaltung, mit einer asymmetrischen Kontur, mit einem Innenwulst, mit einem Außenwulst auf. Dabei können eine oder mehrere solcher Formen zur Ausgestaltung des Gusskerns miteinander kombiniert sein.

In Weiterbildung der Erfindung ist der Hohlraum einseitig zumindest teilweise verschlossen. Ein teilweiser Verschluss bewirkt, dass es beim Abgießen zu keiner lokalen Überhitzung des Gusskerns kommt, wodurch ein mögliches Wegbrennen des Gusskerns sicher vermieden wird. Dadurch wird die Qualität des Abgusses gesteigert. Es ist im Rahmen der Erfindung aber auch möglich, den Hohlraum mit einer in axialer Richtung einseitig geschlossenen Ausgestaltung auszugestalten. Eine solche Ausgestaltung kann beispielsweise hinsichtlich besonderer Festigkeitsanforderungen sinnvoll sein.

In weiterer Ausgestaltung der Erfindung schneidet die Durchbrechung einen radial nach innen weisenden Bereich zumindest einer Umfangswand vollständig weg. Dies ist bevorzugt der zu einer Lagerbohrung für ein Sonnenrad weisende Bereich des Planetensteges. Dieser Bereich ist hinsichtlich der zu übertragenden Kräfte sehr gering belastet und kann daher beispielsweise für eine weitere Gewichtsreduzierung gänzlich entbehrt werden.

In weiterer Ausgestaltung der Erfindung weist die innere Umfangswandung eine in den Hohlraum hineinragende Einschnürung auf. Dabei kann die Einschnürung axial zur Mitte zwischen den beiden Planetenstegen im Durchmesser größer werden. Diese Ausgestaltung ist problemlos gusstechnisch umsetzbar und hat beispielsweise bezüglich der Festigkeit und der Steifigkeit des Planetenstegs Vorteile.

In Weiterbildung der Erfindung weist zumindest eine Planetenstegwange im Bereich des Planetensteges eine in den Planetensteg hineinragende abgerundete Kontur, insbesondere in Form einer Konkavkontur, ganz bevorzugt in Form einer Kugelkalotte, auf. Bevorzugt sind beide Planetenstegwangen mit einer solchen Kugelkalotte ausgebildet. Dabei kann wiederum in Weiterbildung der Erfindung in die abgerundete Kontur eine Durchbruchöffnung eingelassen sein. Diese Durchbruchöffnung, die auf einer Seite oder auf beiden Seiten angeordnet sein kann, kann praktisch ohne Mehraufwand ebenfalls von dem Gusskern gebildet werden. Durch diese Ausgestaltung wird die Steifigkeit des so ausgebildeten Planetenträgers bei gleichzeitiger Materialeinsparung und somit einer Gewichtsreduzierung weiter erhöht.

Bevorzugt weist der Planetenträger drei auf dem Umfang verteilt angeordnete Bohrungen zur Aufnahme von Planetenräder tragenden Wellen auf, die von ebenfalls drei in den Zwischenräumen zwischen den Bohrungen angeordneten Planetenstegen eingefasst werden. Insgesamt bietet die erfindungsgemäße Ausgestaltung des Planetensteges, des Planetenträgers und der entsprechenden Gussform den Vorteil einer modularen Bauweise, da mit einem Gusskasten bestehend aus Oberteil und Unterteil und einem breiten variablen Gusskern mehrere unterschiedliche Planetenstege einer Baureihe erzeugt werden können.

Weiterhin kann der Gusskern so ausgebildet sein, dass die Wandstärke der Wandungen variabel ausgebildet ist. Beispielsweise kann die Wandstärke nach innen wegen der geringeren Belastungen abnehmen. Darüberhinaus kann der Durchbruch von Sicken, Rippen und Versteifungen umgeben sein.

Weitere vorteilhafte Ausgestaltungen der Erfindung sind der Zeichnungsbeschreibung zu entnehmen, in der in den Figuren dargestellte Ausführungsbeispiele der Erfindung näher beschrieben sind.

Es zeigen:
- Figur 1: eine schematische Seitenansicht einer Windkraftanlage mit einem erfindungsgemäß ausgestalteten Planetenträger beziehungsweise Planetensteg des Planetenträgers eines Generatorgetriebes,
- Figur 2: einen Längsschnitt durch einen erfindungsgemäß ausgebildeten Planetenträger mit einem in einem Planetensteg gebildeten Hohlraum, der einseitig offen und einseitig teilweise verschlossen ist,
- Figur 3: einen Längsschnitt durch einen Planetenträger ähnlich der Figur 2, wobei hier der Hohlraum in einen Planetensteg einseitig vollkommen verschlossen ist,
- Figur 4: einen Querschnitt durch einen Planetenträger, der drei unterschiedliche Ausgestaltungen der Planetenstege aufweist,
- Figur 5: einen Querschnitt durch einen Planetenträger ähnlich der Figur 4 mit weiteren drei unterschiedlich ausgebildeten Planetenstegen und
- Figur 6: eine Seitenansicht eines Planetenträgers.

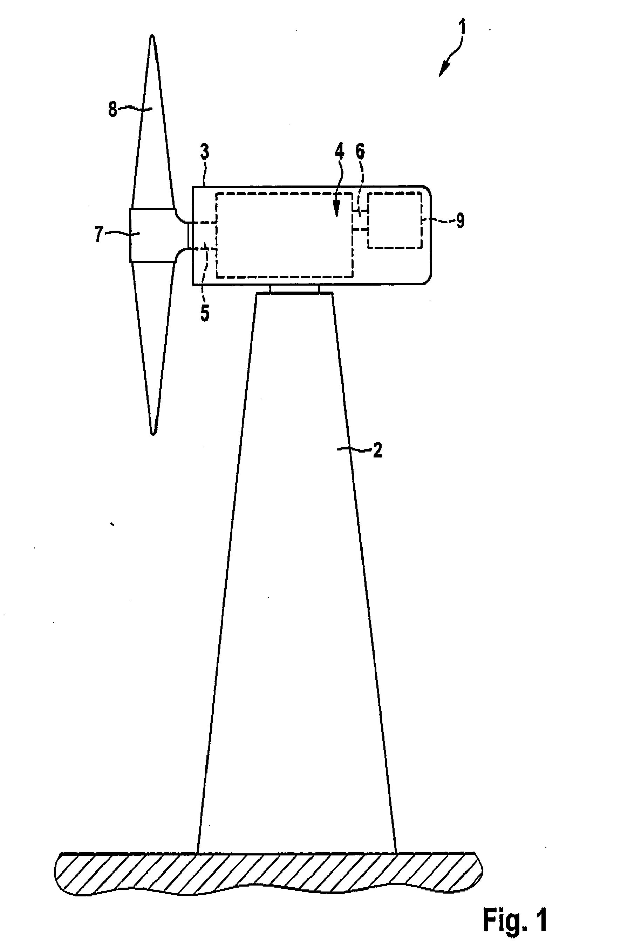

Figur 1 zeigt eine Seitenansicht einer Windkraftanlage 1 mit ihren wesentlichen Baugruppen, Die Windkraftanlage 1 weist einen Turm 2 auf, auf dem eine um eine Vertikalachse drehbar gelagerte Gondel 3 in Form eines Maschinengehäuses angeordnet ist. In der Gondel 3 ist ein Generatorgetriebe 4 drehfest befestigt, wobei das Generatorgetriebe 4 eine Antriebswelle 5 und eine Abtriebswelle 6 aufweist. Die Antriebswelle 5 des Generatorgetriebes 4 ist mit einer Nabe 7 eines mehrere Rotorblätter 8 aufweisenden Rotors verbunden. Die Abtriebswelle 6 ist mit einer anzutreibenden Antriebsvorrichtung in Form eines Generators 9 drehverbunden. Das Generatorgetriebe 4 ist so ausgelegt, dass es eine langsame Drehbewegung der Antriebswelle 5 in eine schnelle Drehbewegung der Abtriebswelle 6 umsetzt. Dazu weist das Generatorgetriebe 4 eine oder mehrere Planetenstufen auf, die über ein abschließendes Stirnradgetriebe mit der Abtriebswelle 6 zusammenwirken. Das Stirnradgetriebe kann aber auch entfallen, wenn die Planetenstufen ausgangsseitig direkt mit der Abtriebswelle 6 zusammenwirken. Ein solches Generatorgetriebe 4 ist bevorzugt als mittelschneillaufendes einfach- oder mehrstufiges Planetengetriebe ausgebildet,

Zumindest eine der Planetenstufen des Generatorgetriebes 4 weist einen erfindungsgemäß ausgebildeten Planetenträger auf. Mittels der Windkraftanlage 1 wird elektrische Energie erzeugt, indem der von dem Wind in Drehbewegung versetzte Rotor die Drehbewegung auf die Antriebswelle 5 in das Generatorgetriebe 4 einleitet. Das Generatorgetriebe 4 setzt die Drehbewegung in eine schnellere Drehbewegung um und schließlich wird über die Abtriebswelle 6 die schnelle Drehbewegung zur Erzeugung von Strom auf den Generator übertragen.

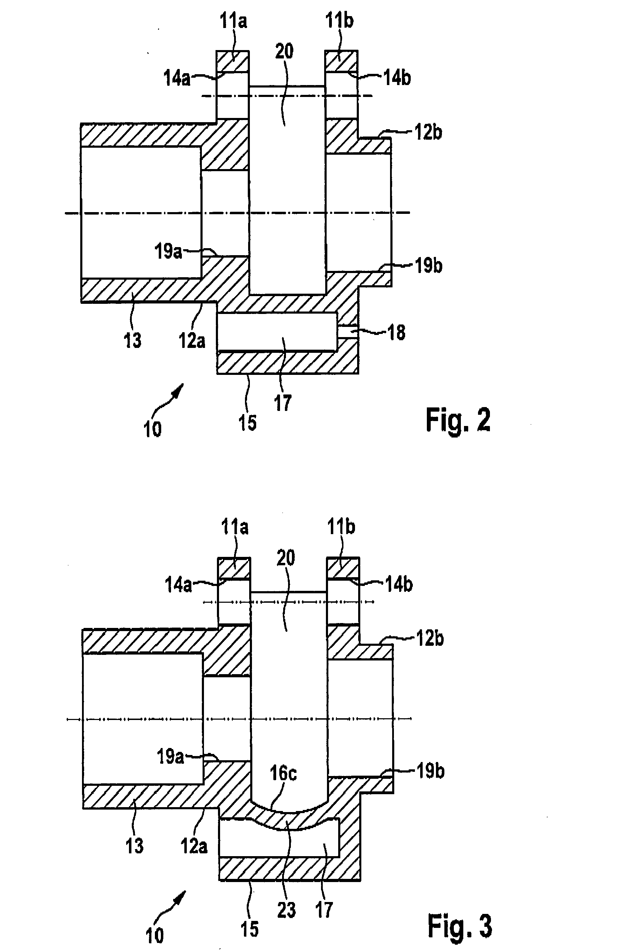

Figur 2 zeigt einen Längsschnitt durch einen erfindungsgemäß ausgebildeten Planetenträger 10 einer Planetenstufe, der in dem Generatorgetriebe 4 verbaut ist. Der Planetenträger 10 ist in einem Gehäuse des Generatorgetriebes 4 gelagert und weist zwei seitlich neben zwei Planetenstegwangen 11a, 11b angeordnete Lagerbereiche 12a, 12b auf, auf die Wälzlager und/oder Gleitlager aufgesetzt werden, die ihrerseits in dem Gehäuse oder einem Gehäuseteil angeordnet sind. Die linke Planetenstegwange 11 a ist mit einem rohrförmigen Fortsatz 13 im Anschluss an den Lagerbereich 12a verbunden, über den eine Drehbewegung in den Planetenträger 10 eingeleitet wird.

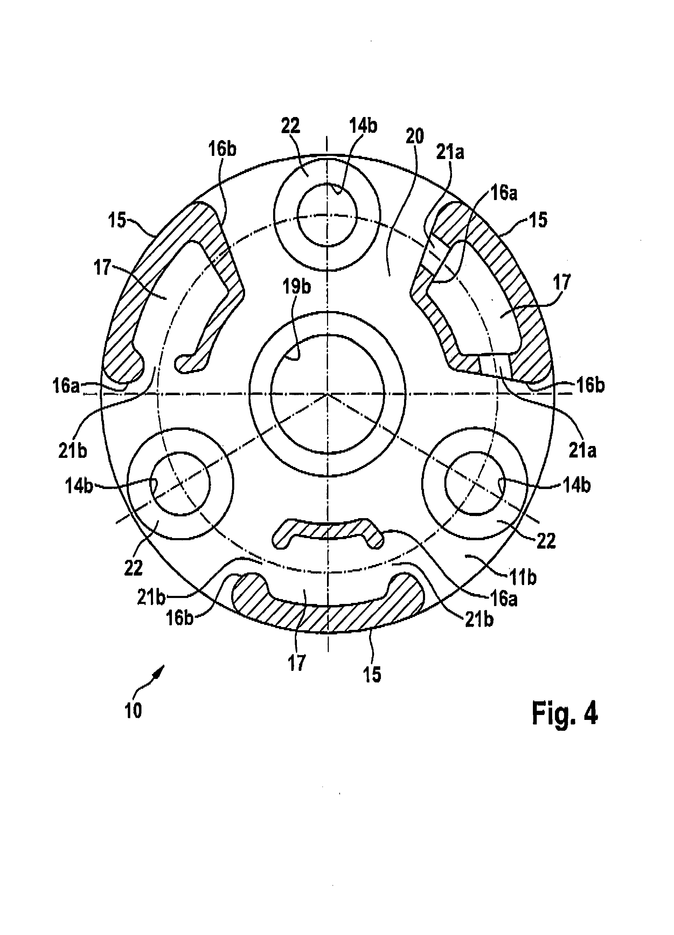

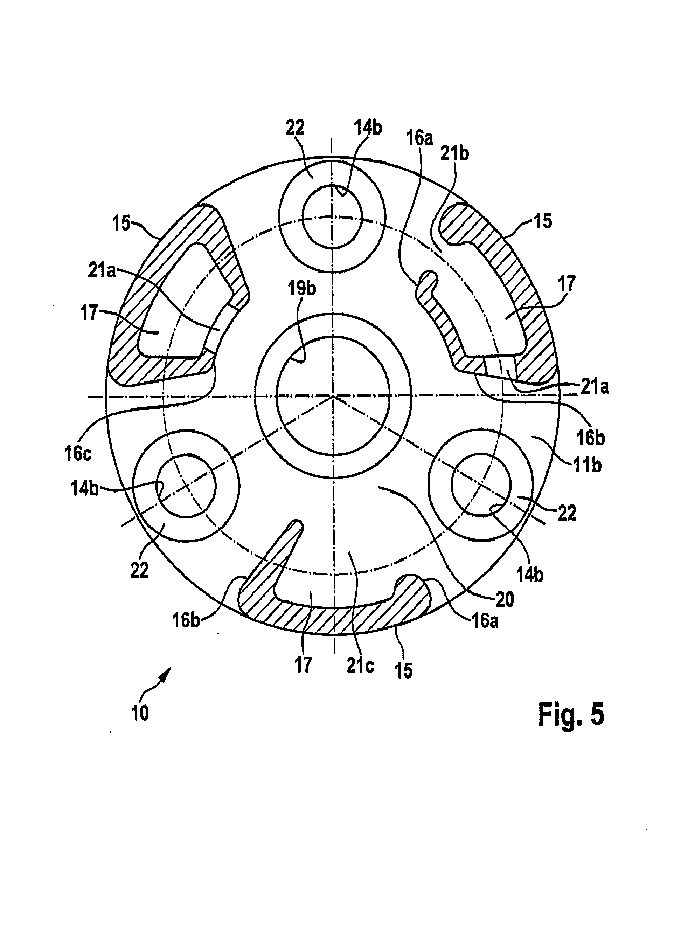

Im oberen Bereich des Planetenträgers 10 sind Bohrungen 14a, 14b in die Planetenstegwangen 11a. 11 b eingearbeitet, in die eine ein Planetenrad tragende Welle eingesetzt wird. Wahlweise kann eine dieser Bohrungen auch als Sacklochbohrung saugebildet sein, die nicht den vollen Durchmesser einer Planetenstegwange 11 a, 11 b durchbricht. Wie den Figuren 4 und 5 zu entnehmen ist, sind drei solcher zusammenwirkender Bohrungen 14a, 14b auf dem Umfang der Planetenstegwangen 11a, 11 b verteilt angeordnet. Zwischen den Planetenstegwangen 11 a, 11b wird im den die Bohrungen 14a, 14b umgebenden Bereich und außerhalb der Planetenstege 15 der die Planetenräder aufnehmende Planetenradraum 20 gebildet. Auf der gegenüberliegenden unteren Seite des Planetenträgers 10 ist ein die Planetenstegwangen 11a. 11 b miteinander verbindender Planetensteg 15 dargestellt, der einen in axialer Richtung des Planetenträgers 10 angeordneten und von Umfangswandungen 16 (siehe Figuren 4 und 5) begrenzten Hohlraum 17 aufweist. Der Hohlraum 17 ist im Bereich der Planetenstegwange 11a offen und im Bereich der Planetenstegwange 11 b unter Bildung eines Durchbruchs 18 teilweise verschlossen. Wie ebenfalls den Figuren 4 und 5 zu entnehmen ist, sind drei solcher Planetenstege 15 (auch Herzchen genannt) auf dem Umfang der Planetenstegwangen 11a. 11 b zwischen den Bohrungen 14a, 14b verteilt angeordnet.

Die Planetenstegwangen 11a, 11b weisen weiterhin zentrale Durchgänge 19a, 19b beispielsweise in Form von Bohrungen auf. In diesem Bereich wird das Sonnenrad zwischen den Planetenstegwangen 11a. 11 b positioniert und von den Planetenrädern getragen. Der so ausgebildete und montierte Planetenträger 10 wird dann insgesamt in das Gehäuse des Generatorgetriebes 4 zusammenwirkend mit einem in die Planetenräder eingreifenden Hohlrad eingesetzt. Dabei ist die Planetenstegwange 11a, die rotorseitige Wange und die Planetenstegwange 11 b die generatorseitige Wange des Generatorgetriebes 4.

Der Planetenträger gemäß Figur 3 unterscheidet sich von dem Planetenträger gemäß Figur 2 lediglich dadurch, dass hier der Hohlraum 17 im Bereich der Planetenstegwange 11 b vollständig verschlossen ist. Weiterhin ist hier dargestellt, dass die innere Umfangswandung 16c eine in den Hohlraum 17 hineinragende Einschnürung 23 aufweist.

Figur 4 zeigt ein Querschnitt durch den Planetenträger 10, wobei hier mehrere Ausführungsmöglichkeiten der Planetenstege 15 kombiniert dargestellt sind. Der Planetenträger 10 weist den zentralen Durchgang 19b in der Planetenstegwange 11 b auf. Um diesen zentralen Durchgang 19b sind in Abständen von 120° Grad die drei Bohrungen 14b in der Planetenstegwange 11 b und um 60° Grad versetzt dazu sind die drei Planetenstagen 15, die die Planetenstegwange 11 b mit der hier nicht sichtbaren Planetenstegwange 11 a verbinden, angeordnet. Die Bohrungen 14a, 14b können umlaufende und/oder umrundende Verstärkungsrippen 22aufweisen. Zwischen den Planetenstegwangen 11 a, 11 b wird im Bereich außerhalb der Planetenstege 15 der die Planetenräder aufnehmende Planetenradraum 20 gebildet, während die Planetenstege 15 mit ihren Umfangswandungen 16 den jeweiligen Hohlraum 17 begrenzen.

Dabei sind in die angenähert gegenüberliegenden Umfangswandungen 16a, 16b des rechten, oberen Planetenstegs 15 Durchbrechungen 21a eingelassen, die von einem gemeinsamen Gusskern zur Bildung des Hohlraums 17 und des Planetenradraums 20 gebildetsind. Im unteren, mittleren Planetensteg 15 sind die Durchbrechungen 21 b so ausgebildet, dass die Umfangswandungen 16a,16b hier als unterbrochene Wandungen ausgebildet sind. Gleiches gilt im Prinzip für den linken, oberen Planatensteg 15, wobei hier nur eine, die Umfangswandung 16a unterbrechende, Durchbrechung vorgesehen ist, während die Umfangswandung 16b geschlossen ist.

Figur 5 zeigt weitere Ausführungsvarianten der Planetenstege. In dem rechten, oberen Planetensteg 15 ist eine Kombination einer einfachen Durchbrechung 21 a (Umfangswandung 16b) und einer die Umfangswandung 16a vollkommen unterbrechende Durchbrechung 21 b dargestellt. Bei einer Linksdrehung des Planetenträgers 10 taucht der so ausgebildete Planetensteg 15 in den Ölsumpf des Generatorgetriebes 4 ein und schöpft Öl in den Hohlraum 17 (zudem fließt durch die axialen Öffnungen beziehungsweise gegebenenfalls vorhandene Durchbrüche 18 Öl in den Hohlraum), das dann beim weiteren Umlauf gezielt einzelnen Lagern und/oder Zahnrädern zugeführt wird. Dadurch kann die Schmierung der einzelnen Zahnräder der Planetenstufe insbesondere bei einem sich langsam drehenden Planetenträger 10 verbessert werden.

In dem unteren, mittleren Planetensteg 15 ist durch die Durchbrechung 21c ein radial nach innen weisender Bereich der Umfangswandung 16 vollständig weggeschnitten, wobei das Maß des Wegschnittes auf den Umfangswandungen 16a, 16b - wie dargestellt - unterschiedlich ausgeführt sein kann. In dern linken, oberen Planetensteg 15 ist in der radial nach innen weisenden Umfangswand 16c eine einfache Durchbrechung 21a angeordnet.

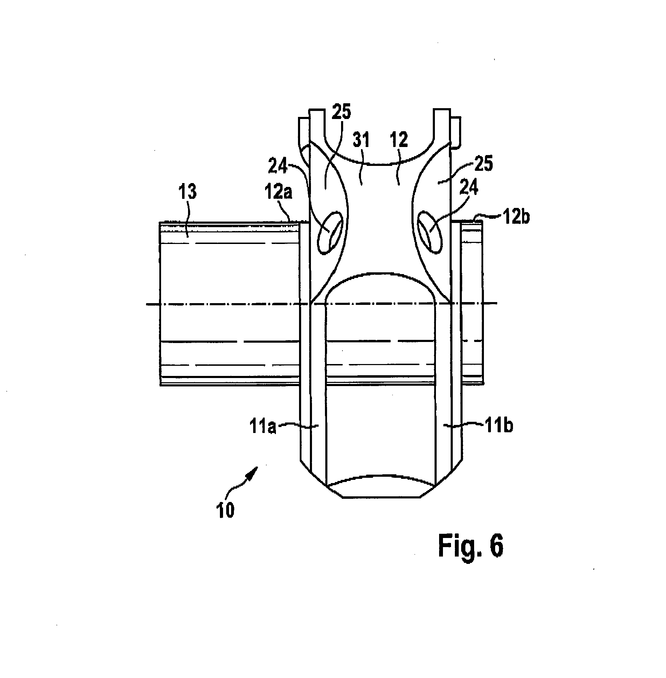

Figur 6 zeigt eine Seitenansicht eines Planetenträgers, ergänzend zu den Schnittdarstellungen der Figuren 2 und 3. Ergänzend zu der diesbezüglichen Beschreibung ist hier ersichtlich, dass beide Planetenstegwangen 11 a, 11 b in Bereich des Planetensteges 15 eine in den Planetensteg 15 hineinragende abgerundete Kontur in Form einer Kugelkalotte 25 aufweisen, in die zusätzlich noch Durchbruchsöffnungen 24 eingelassen sind.

Abschließend wird darauf hingewiesen, dass die dargestellten Ausführungsbeispiele der Erfindung beliebig miteinander kombiniert werden können.

### Bezugszeichenliste

- 1: Windkraftanlage
- 2: Turm
- 3: Gondel
- 4: Generatorgetriebe
- 5: Antriebswelle
- 6: Abtriebswelle
- 7: Nabe
- 8: Rotorblatt
- 9: Generator
- 10: Planetenträger
- 11a, 11b: Planetenstegwange
- 12a, 12b: Lagerbereich
- 13: rohrförmiger Fortsatz
- 14a, 14b: Bohrung
- 15: Planetensteg
- 16a, 16b, 16c: Umfangswandung
- 17: Hohlraum
- 18: Durchbruch
- 19a, 19b: Lagerbohrung
- 20: Planetenradraum
- 21a, 21b, 21c: Durchbrechung
- 22: Verstärkungsrippe
- 23: Einschnürung
- 24: Durchbruchsöffnung
- 25: Kugelkalotte

## Patentansprüche

1. Planetensteg (15) zur Verbindung zweier Planetenstegwangen (11 a, 11 b) zur Bildung eines Planetenradraums (20) eines Planetenträgers (14) eines Planetengetriebes, wobei der Planetensteg (15) in axialer Richtung des Planetenträgers (10) einen von Umfangswandungen (16) begrenzten Hohlraum (17) aufweist,
**dadurch gekennzeichnet, dass** der Planetensteg (15) zumindest eine in einer Umfangswandung (16a, 16b, 16c) des Planetenstegs (15) angeordnete und den Hohlraum (17) mit dem Planetenradraum (20) verbindende Durchbrechung (21a, 21b, 21c) aufweist.

2. Planetensteg (15) nach Anspruch 1.
**dadurch gekennzeichnet, dass** in zwei zumindest angenähert gegenüberliegenden Umfangswandungen (16a, 16b) jeweils eine Durchbrechung (21 a, 21 b) angeordnet sind.

3. Planetensteg (15) nach Anspruch 1 oder 2,
**dadurch gekennzeichnet, dass** die Durchbrechung (21b) als unterbrochene Wandung ausgebildet ist.

4. Planetensteg (15) nach Anspruch 2 oder 3,
**dadurch gekennzeichnet, dass** die Durchbrechungen (21) unsymmetrisch in den Umfangswandungen (16) angeordnet sind.

5. Planetensteg (15) nach einem der vorherigen Ansprüche,
**dadurch gekennzeichnet, dass** die Durchbrechung (21) durch eine Gussform gebildet ist.

6. Planetensteg (15) nach einem der vorherigen Ansprüche,
**dadurch gekennzeichnet, dass** die Durchbrechung (21) eine gießtechnisch darstellbare Ausgestaltung, beispielsweise in runder Form, in herzförmiger Form, in Form eines gerundeten Dreiecks, in spatenförmiger Ausgestaltung, mit einer asymmetrischen Kontur, mit einem Innenwulst, mit einem Außenwulst, aufweist.

7. Planetensteg (15) nach einem der vorherigen Ansprüche,
**dadurch gekennzeichnet, dass** die Durchbrechung (21 c) einen radial nach innen weisenden Bereich zumindest einer Umfangswandung (16a, 16b, 16c) vollständig wegschneidet.

8. Planetensteg (15) nach einem der Ansprüche 1 bis 6,
**dadurch gekennzeichnet, dass** die innere Umfangswandung (16c) eine in den Hohlraum (17) hineinragende Einschnürung (23) aufweist.

9. Planetensteg (15) nach einem der vorherigen Ansprüche,
**dadurch gekennzeichnet, dass** die Planetenstegwange (11a, 11b) im Bereich des Planetensteges (15) eine in den Planetensteg (15) hineinragende abgerundete Kontur, insbesondere in Form einer Konkavkontur, ganz bevorzugt in Form einer Kugelkalotte (25) aufweist.

10. Planetensteg (15) nach Anspruch 9,
**dadurch gekennzeichnet, dass** in die abgerundete Kontur eine Durchbruchsöffnung (24) aufweist.

11. Planetenträger (10) mit einem Planetensteg (15) nach einem der vorherigen Ansprüche.

12. Planetenträger (10) nach Anspruch 11,
**dadurch gekennzeichnet, dass** der Planetenträger (10) Teil eines Strömungskraftanlagengetriebes, insbesondere eines Meeresströmungskraftanlagengetriebes oder eines Windkraftanlagengetriebes ist.

13. Windkraftanlage (1) mit einem Planetenträgers (10) nach einem der vorherigen Ansprüche.

14. Gusskern zum Herstellen eines Planetenträgers (10), aufweisend zwei über zumindest einen Planetensteg (15) miteinander verbundene und einen Planetenradraum (20) einschließende Planetenstegwangen (11a, 11b), wobei der Planetensteg (15) in axialer Richtung des Planetenträgers (10)einen von Umfangswandungen (16) begrenzten Hohlraum (17) aufweist,
**dadurch gekennzeichnet, dass** ein gemeinsamer Gusskern für den Planetenträger (10) zum Einsatz in eine Gießform vorgesehen ist, und dass der den Planetenradraum (20) bildende Teilkern und der den Hohlraum (17) bildende Teilkern des Gusskerns über zumindest eine Durchbrechung (21) In einer Umfangwandung (16) des Planetensteges (15) miteinander verbunden sind.

15. Gusskern nach Anspruch 14,
**dadurch gekennzeichnet, dass** der Gusskern eine Durchbruchsöffnung (24) bildet.

16. Verfahren zum Herstellen eines Planetenträgers (10) in einer Gießform, aufweisend zwei über zumindest einen Planetensteg (15) miteinander verbundene und einen Planetenradraum (20) einschließende Planetenstegwangen (11 a, 11b), wobei der Planetensteg (15) in axialer Richtung des Planetenträgers (10) einen von Umfangswandungen (16) begrenzten Hohlraum (17) aufweist,
**dadurch gekennzeichnet, dass** ein einziger Gusskern für den Planetenträger (10) zum Einsatz in der Gießform vorgesehen ist, und dass den Planetenradraum (20) und den Hohlraum bildende Teilkerne des Gusskerns über zumindest eine Durchbrechung (21) in einer Umfangwandung (16) des Planetensteges (15) miteinander verbunden sind,
